# EUROPÄISCHE PATENTSCHRIFT

(11) **EP 3 123 687 B1**
(45) Veröffentlichungstag und Bekanntmachung des Hinweises auf die Patenterteilung: **10.04.2019**
(21) Anmeldenummer: 15712041.1
(22) Anmeldetag: 24.02.2015
(51) Int. Cl.: H04L 29/06, H04W 12/08, B60R 25/00

(54) **VERFAHREN ZUR AUTORISIERUNG IN EINEM DRAHTLOSEN FAHRZEUG-NETZWERK**
AUTHORIZATION METHOD IN A WIRELESS VEHICLE NETWORK
MÉTHODE D'AUTHORISATION DANS UN RÉSEAU DE VÉHICULE

(30) Priorität: 22.03.2014 DE 102014004182; 08.07.2014 DE 102014010089
(43) Veröffentlichungstag der Anmeldung: 01.02.2017
(60) Teilanmeldung: 17000306.5
(73) Patentinhaber: WABCO GmbH, 30453 Hannover (DE)
(72) Erfinder: DIECKMANN, Thomas, 30982 Pattensen (DE); GLAVINIC, Andelko, 31157 Sarstedt (DE); LAUDE, Ulf, 29313 Hambühren (DE); WOLF, Thomas, 30890 Barsinghausen (DE)
(74) Vertreter: Lauerwald, Jörg
(86) Internationale Anmeldenummer: PCT/EP2015/000419
(87) Internationale Veröffentlichungsnummer: WO 2015/144281

(56) Entgegenhaltungen:
- US-A1- 2008 136 611
- US-A1- 2008 303 648
- US-A1- 2011 215 901

## Beschreibung

Die Erfindung betrifft ein Verfahren zur Autorisierung in einem drahtlosen Fahrzeug-Netzwerk. Weiterhin betrifft die Erfindung ein Steuergerät zur Verwendung in dem Fahrzeug-Netzwerk und ein System zur Durchführung des Verfahrens.

Beim Betrieb eines Nutzfahrzeugs fallen Daten an, die einem Fahrer in seiner Fahrerkabine auf Anzeigeinstrumenten oder anderen Ausgabegeräten zur Verfügung gestellt werden. Beispielsweise erhält der Fahrer eines Lastkraftwagens mit Luftfederung und elektronischem Bremssystem neben Angaben zur Geschwindigkeit und Motordrehzahl auch Informationen zum Systemdruck (Druck im Bremssystem), zur Achslast (über Balgdrucksensoren), zum Abstand zu rückwärtigen Hindernissen (über Näherungssensoren) usw. Die Daten werden teilweise unmittelbar an die Anzeigeinstrumente in der Fahrerkabine übermittelt, zum Teil über ein fahrzeugeigenes Datenbussystem, etwa ein CAN-Datenbussystem.

Das europaweit verbreitete CAN-Datenbussystem lässt nur die Weitergabe spezifizierter Daten zu. Spezielle Daten, die nur in einem bestimmten Fahrzeugtyp anfallen und die noch nicht für den CAN-Datenbus spezifiziert sind, werden nicht übertragen und sind somit für den Fahrer in seiner Fahrerkabine unter Umständen nicht ablesbar. Ein zusätzlicher Kommunikationsweg zwischen Fahrer und Fahrzeug ist erforderlich oder zumindest von Interesse.

In einem Lastzug, bestehend aus mehreren Fahrzeugeinheiten, nämlich aus Zugmaschine und einem oder mehreren Anhängefahrzeugen, können Daten der Anhängefahrzeuge über genormte Schnittstellen zum Zugfahrzeug weitergeleitet werden, etwa über das CAN-Bussystem oder ein Powerline-Adapter oder auf andere Weise. Voraussetzung ist eine entsprechende technische Ausstattung der Zugmaschine und der Anhängefahrzeuge. Typischerweise werden die Daten in einem elektronischen Steuergerät zusammengeführt und dem Datenbussystem zur Verfügung gestellt. Das Steuergerät muss eine entsprechende Schnittstelle für das Datenbussystem aufweisen. Die üblicherweise vorhandene elektrische Verbindung zwischen Zugmaschine und Anhängefahrzeug oder zwischen aufeinanderfolgenden Anhängefahrzeugen ermöglicht die

Übertragung von CAN-Daten nur in sehr eingeschränktem Umfang. Auch hier ist ein zusätzlicher Kommunikationsweg erforderlich oder zumindest vorteilhaft.

Oftmals sollen Nutzfahrzeuge auch nach dem Abstellen Aktionen ausführen und/oder dem Fahrer oder einer anderen Bedienungsperson Informationen zur Verfügung stellen. Dabei hält sich die Bedienungsperson vorzugsweise außerhalb des Fahrzeugs auf. Sinnvoll ist eine Kommunikationsmöglichkeit, ohne dass sich die Bedienungsperson hierfür in der Fahrerkabine aufhalten muss.

Inzwischen weit verbreitet sind mobile Kommunikationsgeräte wie Smartphones, Tablet-PCs und andere Kleincomputer mit der Möglichkeit eine drahtlose Verbindung zur Kommunikation aufzubauen und zu nutzen, beispielsweise auch per WLAN (Wireless Local Area Network). Bei entsprechender technischer Ausstattung eines Fahrzeugs könnte die Bedienungsperson mit dem Smartphone eine Verbindung zum Fahrzeug herstellen und Informationen erhalten bzw. Funktionen im Fahrzeug ausführen. Erforderlich ist zuvor der Aufbau einer drahtlosen Verbindung zwischen dem Smartphone und dem Fahrzeug, wobei sichergestellt werden sollte, dass nur autorisierte Bedienungspersonen eine Verbindung herstellen können. Sofern Funktionen des Fahrzeugs angesprochen werden sollen, ist es sinnvoll, wenn nur genau eine autorisierte Bedienungsperson Zugriff auf das Fahrzeug hat. Anderenfalls können einander widersprechende oder unbeabsichtigte Aufrufe von Funktionen erfolgen.

Aus der DE 10 2012 012 565 A1 ist es bekannt, ein Smartphone mit einer Kommunikationseinheit eines Fahrzeugs per WLAN zu koppeln. Zum Aufbau und zur Authentifizierung der WLAN-Verbindung werden die hierfür erforderlichen Daten (Netzwerkname, Netzwerkschlüssel, Passwort) per USB-Kabel, NFC oder als QR-Code zum Smartphone übertragen. Die Bedienungsperson muss die Daten nicht mehr in das Smartphone eintippen. In der Schrift angesprochen ist auch die Nutzung einer drahtlosen Verbindung zwischen Smartphone und Kommunikationseinheit des Fahrzeugs per Bluetooth. Die zuvor verwendeten Abkürzungen (WLAN, USB, NFC, QR-Code, Bluetooth) und weitere sind in der genannten DE 10 2012 012 565 A1 erläutert.

In der WO 2013/124730 A1 ist ein Anhängefahrzeug mit einem elektronischen Bremsen-Steuergerät offenbart, wobei letzteres über eine genormte Schnittstelle nach ISO 11992 mit dem CAN-Datenbus verbunden ist. An den CAN-Datenbus angeschlossen ist auch eine Kommunikationseinheit, welche als sogenannter Trailer Access Point arbeitet und einen Sender/Empfänger nach dem WLAN-Standard IEEE-802.11 enthält. Der Trailer Access Point kann über WLAN mit einem Smartphone oder mit einem Navigationssystem einer Zugmaschine verbunden sein. Zur Vermeidung unbeabsichtigter Verbindungen kann der Trailer Access Point eine Liste mit zulässigen Nummern möglicher Netzwerkpartner führen. Die Pflege dieser Liste ist aufwendig. Eine große Flexibilität bei der Handhabung verschiedener Zugmaschinen und Anhängefahrzeuge durch unterschiedliche Fahrer ist damit nicht möglich.

US2008303648 offenbart ein Verfahren zum Herstellen einer gesicherten Verbindung zwischen einem ersten Kommunikationseinheit eines ersten Fahrzeugs und einem zweiten Kommunikationseinheit eines zweiten Fahrzeugs, wobei eine Drahtverbindung benutzt wird zur Sicherung der drahtlosen Verbindung.

Netzwerk-Geräte, die einmal in einem drahtlosen Fahrzeug-Netzwerk miteinander verbunden waren, können die zum Aufbau der Verbindung erforderlichen Verbindungsdaten löschen und vor jedem Verbindungsaufbau wieder neu einlesen, beispielsweise durch das oben genannte Erfassen eines QR-Codes, oder die Verbindungsdaten abspeichern, so dass der nächste Verbindungsaufbau automatisch und ohne nochmalige Erfassung des QR-Codes möglich ist. Aus Komfortgründen ist letzteres vorteilhaft. Dadurch kann die Situation entstehen, dass ein Trailer Access Point automatische Verbindungen zu mehreren Smartphones als Clients im WLAN oder einem anderen drahtlosen Netzwerk herstellt. Sofern die Clients nur Informationen abfragen, ist dies in der Regel unkritisch. Gefährliche Situationen können entstehen, wenn ein Bediener/Fahrer über sein Smartphone per WLAN mit der Kommunikationseinheit eines Fahrzeugs verbunden ist und Steuerfunktionen ausführen will, etwa im Sinne einer Fernbedienung. Hierzu muss sichergestellt sein, dass das Smartphone mit dem Fahrzeug verbunden ist, welches der Fahrer/Bediener tatsächlich fernsteuern will. Es darf nicht versehentlich eine Verbindung zu einem anderen Fahrzeug bestehen.

Aufgabe der vorliegenden Erfindung ist die sichere Autorisierung der Kommunikation zwischen zwei Kommunikationseinheiten in einem drahtlosen Fahrzeug-Netzwerk. Dabei gilt auch eine mobile Kommunikationseinheit eines Fahrers/Bedieners als Teil des drahtlosen Fahrzeug-Netzwerks.

Gegenstand der Erfindung ist ein Verfahren zur Autorisierung der Kommunikation zwischen einer ersten einem Steuergerät zugeordneten fahrzeugseitigen Kommunikationseinheit eines ersten Fahrzeugs und einer zweiten einem Steuergerät zugeordneten fahrzeugseitigen Kommunikationseinheit eines zweiten Fahrzeugs, wobei zwischen den beiden Fahrzeugen eine physikalisch-mechanische Verbindung besteht. Das Verfahren weist die Merkmale des Anspruchs 1 auf. Zwischen den beiden fahrzeugseitigen Kommunikationseinheiten besteht eine nicht-autorisierte drahtlose Verbindung. Die erste fahrzeugseitige Kommunikationseinheit sendet über die drahtlose Verbindung an die zweite fahrzeugseitige Kommunikationseinheit eine Anfrage nach Autorisierung der Kommunikation. Anschließend fordert eine der beiden fahrzeugseitigen Kommunikationseinheiten über die drahtlose Verbindung die jeweils andere fahrzeugseitige Kommunikationseinheit zu einer Rückmeldung auf. Die Rückmeldung erfolgt auf der physikalisch-mechanischen Verbindung. Nach erfolgter Rückmeldung wird eine autorisierte drahtlose Verbindung eingerichtet.

Alternativ kann die Aufforderung zur Rückmeldung über die physikalisch-mechanische Verbindung erfolgen und die Rückmeldung selbst über die drahtlose Verbindung oder über die physikalisch-mechanische Verbindung. Mit dem beschriebenen Verfahren kann auf einfache Weise die drahtlose Verbindung zwischen zwei miteinander gekoppelten Fahrzeugen überprüft und autorisiert werden. Auslöser der Autorisierung können beispielsweise die Kopplung zweier Fahrzeuge oder eine Anfrage durch eine mobile Kommunikationseinheit bei einer der fahrzeugseitigen Kommunikationseinheiten sein.

Gegenstand der Erfindung ist auch ein Steuergerät zur Verwendung im Fahrzeug-Netzwerk, mit einer fahrzeugseitigen Kommunikationseinheit und zur Durchführung der voranstehend erläuterten Verfahren. Bei dem Steuergerät handelt es sich vorzugsweise um ein elektronisches Bremsen-Steuergerät. Das Steuergerät beinhaltet eine fahrzeugseitige Kommunikationseinheit für die drahtlose Kommunikation, insbesondere für ein WLAN. Die fahrzeugseitige Kommunikationseinheit kann auch außerhalb des Steuergerätes vorgesehen sein und ist dann dem Steuergerät zugeordnet. Steuergerät und Kommunikationseinheit weisen die für die Durchführung des Verfahrens erforderliche Software auf.

Gegenstand der Erfindung ist schließlich ein System zur Durchführung des Verfahrens, mit einer mobilen Kommunikationseinheit, einem Fahrzeug, einem Steuergerät im Fahrzeug und einer dem Steuergerät zugeordneten fahrzeugseitigen Kommunikationseinheit. Die Kommunikationseinheiten und das Steuergerät weisen die für die Durchführung des Verfahrens erforderliche Software auf bzw. sind zur Durchführung des Verfahrens ausgebildet und eingerichtet.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
Fig. 1 eine schematische Darstellung eines drahtlosen Fahrzeug-Netzwerks (eines Systems) aus Smartphone, Anhängefahrzeug und Motorwagen, mit Darstellung der Schritte zur Autorisierung der Verbindung zwischen Smartphone und Anhängefahrzeug,
Fig. 2 eine stark vereinfachte Wiedergabe der Darstellung gemäß Fig. 1,
Fig. 3 eine Darstellung analog Fig. 2, jedoch nur mit Smartphone und Motorwagen,
Fig. 4 eine Darstellung analog Fig. 2, jedoch nur mit Smartphone und Anhängefahrzeug, also ohne Motorwagen,
Fig. 5 eine Darstellung analog Fig. 2, jedoch mit einer drahtlosen Verbindung zwischen dem Smartphone und dem Motorwagen.

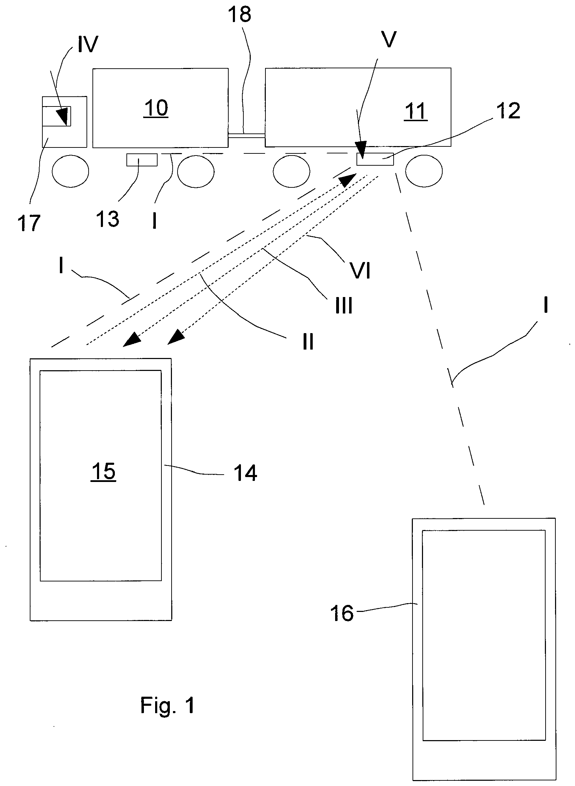

Anhand von Fig. 1 wird der Ablauf bei der Autorisierung in einem drahtlosen Fahrzeug-Netzwerk erläutert. Es wird ausgegangen von einem Lastzug, bestehend aus Motorwagen 10 und Anhängefahrzeug 11. Beide Fahrzeuge 10, 11 weisen eine pneumatische Bremsanlage mit einem elektronischen Bremssystem auf. Im Anhängefahrzeug 11 ist ein elektronisches Bremsen-Steuergerät mit einer fahrzeugseitigen Kommunikationseinheit 12 vorgesehen. Analog dazu ist im Motorwagen 10 ein elektronisches Bremsen-Steuergerät mit einer fahrzeugseitigen Kommunikationseinheit 13 angeordnet. Die beiden Kommunikationseinheiten 12, 13 sollen in einem WLAN drahtlos miteinander kommunizieren können.

Ein Bediener des Motorwagens 10 ist mit einem Smartphone 14 ausgestattet, welches zusätzlich zur Telefonfunktion eine WLAN-Funktion aufweist und als mobile Kommunikationseinheit arbeitet. Die beiden Kommunikationseinheiten 12, 13 und das Smartphone 14 können zusammen das Fahrzeug-Netzwerk aufspannen. Natürlich können auch zwei der genannten Geräte 12, 13, 14 ein (kleineres) Fahrzeug-Netzwerk bilden.

Zur Verbesserung des Komforts und zur eindeutigen Identifizierung im Zusammenwirken mit dem Smartphone 14 ist vorgesehen, dass Motorwagen 10 und Anhängefahrzeug 11 jeweils mit einem optischen Muster, nämlich einem QR-Code an definierter Stelle ausgestattet sind. Das optische Muster enthält die für den Aufbau einer WLAN-Verbindung zwischen dem betreffenden Fahrzeug 10 oder 11 und dem Smartphone 14 erforderlichen Verbindungsdaten. Auf dem Smartphone 14 ist eine sogenannte App installiert, die beispielsweise von dem Hersteller des Bremsen-Steuergeräts zur Verfügung gestellt wird, und mit der der Aufbau einer Verbindung in Kenntnis der im optischen Muster enthaltenen Daten möglich ist. Nach Aufbau der Verbindung greift die App auf die im Steuergerät vorhandenen Informationen zu und zeigt diese auf einem Display 15 des Smartphones 14 an.

In Fig. 1 ist ein weiteres Smartphone 16 abgebildet. Es handelt sich dabei um das Smartphone 16 des Bedieners eines anderen Lastzuges (nicht gezeigt). Im Smartphone 16 sind ebenfalls die dem Anhängefahrzeug 11 zugehörigen Verbindungsdaten gespeichert, nämlich aufgrund einer früheren Erfassung des optischen Musters am Anhängefahrzeug 11. Dieser Fall kann beispielsweise eintreten, wenn der Bediener des Smartphones 16 früher einmal das optische Muster am Anhängefahrzeug 11 erfasst hat, um die im Steuergerät vorhandenen Informationen auszulesen.

Die App im Smartphone 16 mit der WLAN-Funktion einerseits und die fahrzeugseitige Kommunikationseinheit 12 andererseits sind so eingestellt und vorgesehen, dass automatisch eine Verbindung hergestellt wird, sobald das Smartphone 16 sich in Reichweite der Kommunikationseinheit 12 befindet und eine Verbindung möglich ist. Wie in Fig. 1 gezeigt, können auf diese Weise zwei oder mehr Smartphones 14, 16 mit der fahrzeugseitigen Kommunikationseinheit 12 verbunden sein. Die betreffenden Verbindungen sind in Fig. 1 mit der Ziffer I bezeichnet. Es handelt sich dabei um sogenannte nicht-autorisierte Verbindungen, über die nur Informationen abrufbar sind. In analoger Weise können die beiden fahrzeugseitigen Kommunikationseinheiten 12 und 13 über eine nicht-autorisierte Verbindung I miteinander kommunizieren.

Der Bediener des Lastzuges, bestehend aus Motorwagen 10 und Anhängefahrzeug 11, möchte Funktionen im Anhängefahrzeug 11 fernsteuern, etwa eine Niveauveränderung durch Steuerung des Drucks in einer Luftfederung herbeiführen. Hierzu sendet der Bediener mit seinem Smartphone 14 an die Kommunikationseinheit 12 eine Anfrage nach Autorisierung der Kommunikation siehe Pfeil II. Die Kommunikationseinheit 12 sendet an das Smartphone 14, von der die Anfrage kam, eine Anforderung zur Durchführung einer Aktion am Fahrzeug, siehe Pfeil III. Diese sogenannte Aktion am Fahrzeug wird auf dem Display angezeigt und kann beispielsweise die Betätigung eines Bremspedals oder das Einlegen eines Rückwärtsganges sein. Es handelt sich um Aktionen, die typischerweise in der Kommunikationseinheit 12 des Anhängefahrzeugs 11 bzw. im zugehörigen Steuergerät detektierbar sind. So führt die Betätigung des Bremspedals der Betriebsbremse zu einer Veränderung im Steuerdruck und zum Aufleuchten der Bremslichter. Beides ist im Steuergerät der Kommunikationseinheit 12 detektierbar. Zur Durchführung der angeforderten Aktion am Fahrzeug muss sich hier der Bediener in einem Fahrerhaus 17 des Motorwagens 10 aufhalten, siehe Pfeil IV. Die ausgeführte Aktion wird vom Steuergerät detektiert, siehe Pfeil V und die fahrzeugseitige Kommunikationseinheit 12 autorisiert die Kommunikation mit dem Smartphone 14, siehe Pfeil V. Nach Versendung der Autorisierung und/oder nach Eingang der Autorisierung im Smartphone 14 ist letzteres zum Aufruf von Funktionen im Anhängefahrzeug 11 berechtigt, so dass eine Fernsteuerung der vorgegebenen Funktionen möglich ist. Smartphone 14 und Kommunikationseinheit 12 weisen die hierfür erforderliche Software auf. Anhand der beschriebenen Bedingungen und Merkmale ist eine derartige Software für einen Fachmann auf diesem Gebiet erstellbar.

Das Smartphone 16 verfügt weiterhin nur über die nicht-autorisierte Verbindung, da vom Smartphone 16 aus keine Anfrage nach Autorisierung der Kommunikation an die Kommunikationseinheit 12 gerichtet wurde. Nachdem das Smartphone 14 von der Kommunikationseinheit 12 autorisiert wurde, werden Autorisierungen mit anderen Smartphones nicht mehr zugelassen. Erst wenn das Smartphone 14 die Verbindung beendet oder die Verbindung aus anderen Gründen abbricht, kann erneut die Verbindung zu genau einer mobilen Kommunikationseinheit wieder autorisiert werden.

In Fig. 1 ebenfalls dargestellt ist eine gestrichelte Linie I zwischen den Kommunikationseinheiten 12 und 13. Es handelt sich um eine wahlweise mögliche drahtlose Verbindung zwischen diesen Kommunikationseinheiten. Damit können auch die jeweils zugeordneten Steuergeräte miteinander kommunizieren. Die drahtlose Verbindung wird nach einem ähnlichen Muster hergestellt, wie zwischen dem Smartphone 14 und der Kommunikationseinheit 12:
Zwischen Motorwagen 10 und Anhängefahrzeug 11 besteht eine physikalisch-mechanische Verbindung 18, welche hier neben einer Deichsel eine pneumatische Leitung für einen Vorratsdruck, eine weitere pneumatische Leitung für einen Steuerdruck und eine elektrische Leitung, mit einer Schnittstelle nach ISO 7638 bzw. ISO 11992 enthält. Über die elektrische Leitung können ein Bremslichtsignal übertragen werden und/oder Daten in begrenztem Umfang.

Die beiden fahrzeugseitigen Kommunikationseinheiten 12, 13 können einander im WLAN-Netzwerk "sehen". Es besteht zumindest eine nicht-autorisierte drahtlose Verbindung. Über diese sendet eine der beiden Kommunikationseinheiten 12, 13 an die andere Kommunikationseinheit eine Anfrage nach Autorisierung der Kommunikation. Daraufhin sendet eine der beiden Kommunikationseinheiten 12, 13 über die drahtlose Verbindung an die andere Kommunikationseinheit eine Aufforderung zu einer Rückmeldung, nämlich zu einer Rückmeldung auf der physikalisch-mechanischen Verbindung. Die andere Kommunikationseinheit veranlasst dann die Rückmeldung auf der physikalisch-mechanischen Verbindung. Konkret löst das zugeordnete Steuergerät eine Funktion aus, die die gewünschte Rückmeldung bewirkt, z. B. das Öffnen und Schließen eines Ventils in der pneumatischen Bremsanlage zur Erzeugung einer Änderung im Steuerdruck oder Vorratsdruck, was vom jeweils anderen Steuergerät detektiert werden kann. Nach erfolgter Rückmeldung besteht Sicherheit darüber, dass keine irrtümliche Verbindung mit einer "unbeteiligten" Kommunikationseinheit zustande gekommen ist. Es wird deshalb nun die drahtlose Verbindung zwischen den beiden fahrzeugseitigen Kommunikationseinheiten autorisiert.

Im voranstehend beschriebenen Beispiel erfolgt die Aufforderung zur Rückmeldung über die drahtlose Verbindung, während die Rückmeldung selbst über die physikalisch-mechanische Verbindung durchgeführt wird. Alternativ kann in umgekehrter Reihenfolge vorgegangen werden: Eine der Kommunikationseinheiten veranlasst die jeweils andere Kommunikationseinheit über die physikalisch-mechanische Verbindung zu einer Rückmeldung. Die Rückmeldung selbst erfolgt über die drahtlose Verbindung. Außerdem kann in diesem Fall die Rückmeldung auch über die physikalisch-mechanische Verbindung durchgeführt werden.

Für den Zeitraum zwischen der Aufforderung zur Rückmeldung und der Rückmeldung können ein definierter Zeitraum oder ein Zeitfenster vorgesehen sein. Sofern eine Rückmeldung außerhalb des Zeitfensters erfolgt, wird die Rückmeldung ignoriert. Es wird dann die drahtlose Verbindung nicht autorisiert.

Die fahrzeugseitigen Kommunikationseinheiten sind vorzugsweise den elektronischen Bremsen-Steuergeräten der Fahrzeuge zugeordnet. Es kann sich aber auch um andere elektronische Steuergeräte in den beteiligten Fahrzeugen handeln. Es sollte aber eine Datenverbindung zu anderen Steuergeräten bzw. zum CAN-Bus des jeweiligen Fahrzeugs bestehen.

Bei geeigneter Software der Kommunikationseinheiten 12 und 13 ist es im Beispiel der Fig. 1 möglich mit dem Smartphone 14 auch Funktionen des Motorwagens 10 zu steuern. Der Signalweg läuft dann vom Smartphone 14 über die Kommunikationseinheit 12 zur Kommunikationseinheit 13 des Motorwagens 10.

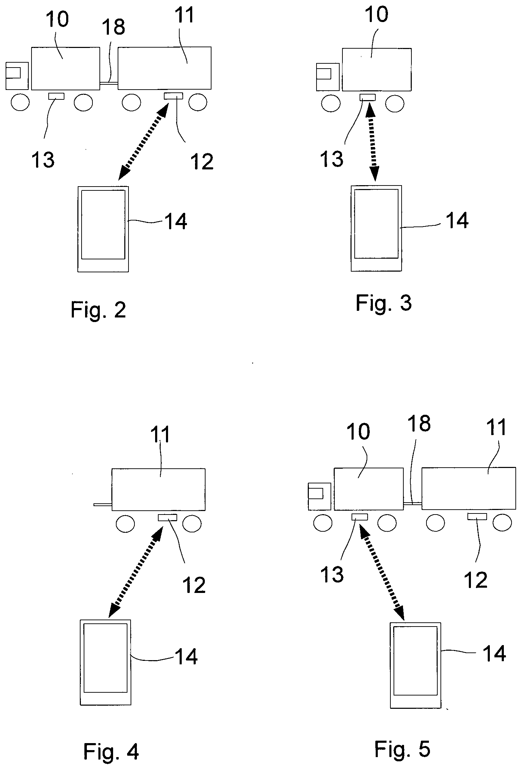

Fig. 2 ist eine vereinfachte Darstellung von Fig. 1. Die Figuren 3 und 5 stellen Abwandlungen der Konfiguration gemäß Fig. 1 und 2 dar.

Fig. 3 bezieht sich auf die mögliche Kopplung zwischen dem Smartphone 14 und der Kommunikationseinheit 13 des Motorwagens 10. Dies ist beispielsweise dann von Nutzen, wenn der Fahrer Funktionen des Fahrzeugs von außen ausführen und überprüfen möchte.

Fig. 4 bezieht sich auf die Kopplung des Smartphones 14 nur mit dem Anhängefahrzeug 11 bzw. dessen Kommunikationseinheit 12. Es besteht keine physikalisch-mechanische Verbindung zu einem Motorwagen. Diese Konstellation ist insbesondere für Anhängefahrzeuge mit elektrischem Energieerzeuger oder Energiespeicher relevant. Beispielsweise können Kühlanhänger einen eigenen Generator aufweisen und die Systeme des Anhängefahrzeugs mit elektrischer Energie versorgen.

Fig. 5 betrifft wiederum den Lastzug aus Motorwagen 10 und Anhängefahrzeug 11. Im Gegensatz zu Fig. 1 und 2 besteht aber eine autorisierte Verbindung zwischen dem Smartphone 14 und der Kommunikationseinheit 13 des Motorwagens 10. Dieser Fall tritt beispielsweise auf, wenn zunächst eine Konstellation gemäß Fig. 3 vorliegt und dann das Anhängefahrzeug 11 angehängt wird.

## Patentansprüche

1. Verfahren zur Autorisierung in einem drahtlosen Fahrzeug-Netzwerk, nämlich zur Autorisierung der Kommunikation zwischen einer ersten einem Steuergerät zugeordneten fahrzeugseitigen Kommunikationseinheit (13) eines ersten Fahrzeugs (10) und einer zweiten einem Steuergerät zugeordneten fahrzeugseitigen Kommunikationseinheit (12) eines zweiten Fahrzeugs (11) wobei zwischen den beiden Fahrzeugen eine physikalisch-mechanische Verbindung (18) besteht, **dadurch gekennzeichnet, dass** zwischen den beiden fahrzeugseitigen Kommunikationseinheiten eine nicht-autorisierte drahtlose Verbindung besteht, dass die erste fahrzeugseitige Kommunikationseinheit über die drahtlose Verbindung an die zweite fahrzeugseitige Kommunikationseinheit eine Anfrage nach Autorisierung der Kommunikation sendet,
und dass dann eine der beiden Alternativen a) oder b) ausgeführt wird:
a)
- eine der beiden fahrzeugseitigen Kommunikationseinheiten fordert über die drahtlose Verbindung die jeweils andere fahrzeugseitige Kommunikationseinheit zu einer Rückmeldung auf,
- die Rückmeldung erfolgt auf der physikalisch-mechanischen Verbindung,
- nach erfolgter Rückmeldung wird eine autorisierte drahtlose Verbindung eingerichtet;
b)
- eine der beiden fahrzeugseitigen Kommunikationseinheiten veranlasst über die physikalisch-mechanische Verbindung die jeweils andere fahrzeugseitige Kommunikationseinheit zu einer Rückmeldung,
- die Rückmeldung erfolgt über die drahtlose Verbindung oder über die physikalisch-mechanische Verbindung,
- nach erfolgter Rückmeldung wird eine autorisierte drahtlose Verbindung eingerichtet.

2. Steuergerät zur Verwendung in einem Fahrzeug-Netzwerk, mit einer fahrzeugseitigen Kommunikationseinheit und zur Durchführung des Verfahrens nach einem der Anspruch 1.

## Claims

1. Method for authorizing in a wireless vehicle network, namely for authorizing the communication between a first vehicle communication unit (13), associated with a controller, of a first vehicle (10) and a second vehicle communication unit (12), associated with a controller, of a second vehicle (11),
wherein the two vehicles have a physical/mechanical connection (18) between them, **characterized in that** the two vehicle communication units have an unauthorized wireless connection between them, **in that** the first vehicle communication unit uses the wireless connection to send to the second vehicle communication unit a request for authorisation of the communication, and **in that** one of the two alternatives a) or b) is then carried out:
a)
- one of the two vehicle communication units uses the wireless connection to ask the other vehicle communication unit to provide an acknowledgement,
- the acknowledgement is provided on the physical/mechanical connection,
- the acknowledgement provided is followed by an authorized wireless connection being set up;
b)
- one of the two vehicle communication units uses the physical/mechanical connection to prompt the other vehicle communication unit to provide an acknowledgment,
- the acknowledgment is provided by means of the wireless connection or by means of the physical/mechanical connection,
- the acknowledgement provided is followed by an authorized wireless connection being set up.

2. Controller for use in a vehicle network, having a vehicle communication unit and for performing the method according to one of Claim 1.

## Revendications

1. Procédé d'autorisation dans un réseau de véhicule sans fil, à savoir pour autoriser la communication entre une première unité de communication côté véhicule (13) d'un premier véhicule (10), associée à un appareil de commande, et une deuxième unité de communication côté véhicule (12) d'un deuxième véhicule (11), associée à un appareil de commande, une connexion physique-mécanique (18) existant entre les deux véhicules, **caractérisé en ce qu'**entre les deux unités de communication côté véhicule existe une connexion sans fil non autorisée, **en ce que** la première unité de communication côté véhicule envoie par le biais de la connexion sans fil à la deuxième unité de communication côté véhicule une demande d'autorisation de communication, et **en ce que** l'une des deux alternatives suivantes a) ou b) est alors effectuée :
a)
- l'une des deux unités de communication côté véhicule demande par le biais de la connexion sans fil une réponse de l'autre unité de communication côté véhicule respective,
- la réponse s'effectue par le biais de la connexion physique-mécanique,
- après le succès de la réponse, une communication sans fil autorisée est établie ;
b)
- l'une des deux unités de communication côté véhicule demande par le biais de la connexion physique-mécanique une réponse à l'autre unité de communication côté véhicule respective,
- la réponse s'effectue par le biais de la connexion sans fil ou par le biais de la connexion physique-mécanique,
- après le succès de la réponse, une communication sans fil autorisée est établie.

2. Appareil de commande pour l'utilisation dans un réseau de véhicule, comprenant une unité de communication côté véhicule et destiné à mettre en oeuvre le procédé selon l'une des revendication 1.
